# EUROPÄISCHE PATENTSCHRIFT

(11) **EP 1 752 321 B1**
(45) Veröffentlichungstag und Bekanntmachung des Hinweises auf die Patenterteilung: **16.10.2013**
(21) Anmeldenummer: 06016479.5
(22) Anmeldetag: 08.08.2006
(51) Int. Cl.: B60G 7/00, B60G 21/00, B60G 21/05, B62D 17/00

(54) **Einrichtung zur Verstellung des Radsturzes**
Device for adjusting the camber
Dispositif pour modifier le carrossage

(30) Priorität: 11.08.2005 DE 102005037974
(43) Veröffentlichungstag der Anmeldung: 14.02.2007
(73) Patentinhaber: Schaeffler Technologies AG & Co. KG, 91074 Herzogenaurach (DE)
(72) Erfinder: Grau, Ulrich, Dr., 91448 Emskirchen (DE); Kraus, Manfred, Dr., 91074 Herzogenaurach (DE)

(56) Entgegenhaltungen:
- EP-A- 0 352 178
- EP-A- 0 378 028
- DE-A1- 2 645 060
- DE-A1- 3 629 881
- DE-A1- 4 020 547
- DE-A1- 10 038 167
- DE-A1- 10 064 585
- DE-A1- 19 942 890
- US-A- 2 902 100

## Beschreibung

Die vorliegende Erfindung betrifft eine Achse eines Kraftfahrzeuges mit einer Einrichtung zur Verstellung des Radsturzes der Räder einer Achse eines Kraftfahrzeuges. Bei diesen Einrichtungen ist ein Aktuator zur Verstellung des Radsturzes vorgesehen, wobei ein Exzenterantrieb des Aktuators an einem das Rad tragenden Radträger angreift. Der Aktuator kann unmittelbar an diesem Radträger angreifen, oder auch unter Zwischenschaltung eines Fahrwerkslenkers, wie sie üblicherweise bei Fahrwerken zum Einsatz kommen.

Aus DE 199 42 890 A1 beispielsweise ist eine Verstellvorrichtung bekannt geworden, die zwischen einem Fahrzeugkarosserieabschnitt und einem Federbein angeordnet ist. Sie ist zur Veränderung der wirksamen Länge des Federbeins und des Spreizwinkels während des Fahrbetriebes bewegbar. Die Bewegung umfasst eine Richtungskomponente in Fahrzeugvertikalrichtung oder eine Richtungskomponente quer zu einer Fahrzeuglängsachse und eine Richtungskomponente in Fahrzeugvertikalrichtung. Diese Anordnung im oberen Federbeinlager ermöglicht eine zielgerichtete Verstellung des Spreizwinkels und damit des Sturzes des betreffenden Rades. Ein integrales Einstellelement ist als drehbares, an dem Fahrzeugkarosserieabschnitt anbringbares Exzenterelement ausgebildet, an dem der Anlenkpunkt des Federbeins exzentrisch zu dessen Drehachse vorgesehen ist. Zum einen sind derartige Verstelleinrichtungen für jedes Rad vorzusehen. Zum anderen trägt das Federbein eine erhebliche Last des Fahrzeugaufbaus. Der an das Federbein gekoppelte Exzenterantrieb und der den Exzenterantrieb antreibende Motor müssen daher für eine entsprechende Leistungsbereitstellung groß dimensioniert sein.

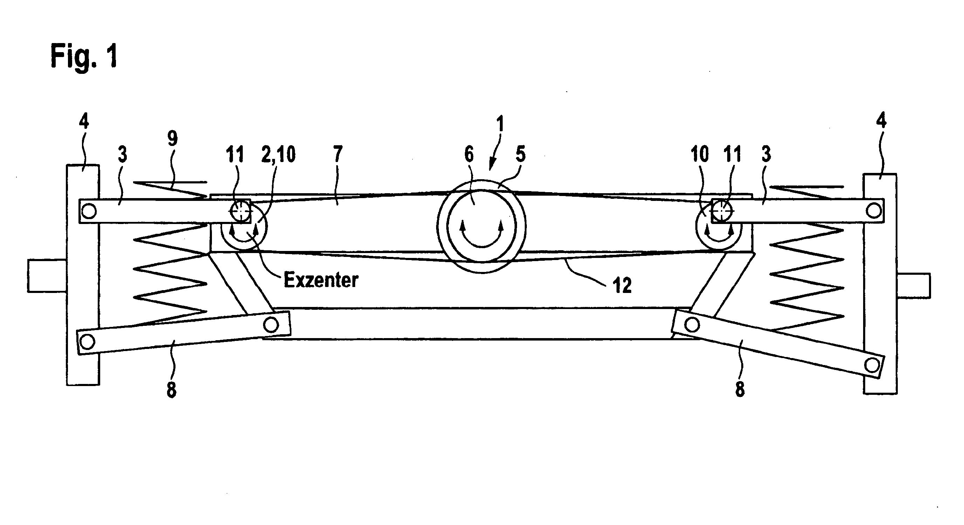

DE 26 45 060 A1 offenbart eine sogenannte Federbeinachse, bei der ein radführendes Federdämpferelement vorgesehen ist. Am oberen Federbeinlager greift ein Exzenterantrieb an, der die Lage des Federbeins derart verändert, dass sowohl der Vorlauf (Figur 1) als auch der Radsturz (Figur 2) bei Veränderung des oberen Lagerungspunktes eintreten. Hier ist ein Verstellelement vorgesehen, das den einen Exzenterantrieb betätigt, der andere Exzenterantrieb des gegenüberliegenden Federbeins wird nicht direkt über dieses Verstellelement betätigt, sondern vielmehr ist hier eine Reihenschaltung vorgesehen, wonach das Verstellelement den Exzenterantrieb betätigt, und dieser Exzenterantrieb den Exzenterantrieb des anderen Federbeins betätigt.

EP 0 352 178 A1 offenbart eine Sturzverstelleinrichtung, bei der über eine aufwendige mechanische Kopplung der Sturz der Räder der Vorderachse sowie der Hinterachse verstellbar ist. Die Verstellung erfolgt hier über eine Zahnstange, die an einem Exzenterantrieb Verstellbewegungen auslösen kann. An jedem Rad ist ein Exzenterantrieb ausgebildet. Der Sturzwinkel der Räder verändert sich unter der Einwirkung von Steuereinrichtungen für den Wenderadius.

Aufgabe der vorliegenden Erfindung war es, eine Achse mit einer Einrichtung anzugeben, die einfach aufgebaut ist. Erfindungsgemäß wird diese Aufgabe durch die Achse gemäß Anspruch 1 gelöst. Anstelle der bekannten Einzelradlösung, bei der jede Verstelleinrichtung einen eigenen Motor aufweist, sieht die Erfindung einen gemeinsamen Motor für die beiden Räder einer Achse vor. Diese Anordnung bietet zudem den Vorteil einer synchronisierten und erzwungenen Verstellung des Sturzwinkels der beiden Räder einer Achse. Zudem sind die beiden Exzenterantriebe an einem Fahrschemel des Kraftfahrzeuges oder am Fahrzeugaufbau gelagert. Diese Anordnung ist vorzugsweise so gewählt, dass die Exzenterantriebe an einem Fahrwerkslenker gelenkig angreifen können, wobei dieser Fahrwerkslenker gelenkig mit dem Radträger verbunden ist. Von außen an dem Rad angreifende Kräfte werden über den Exzenterantrieb in den Fahrschemel geleitet; diese äußeren Kräfte gelangen nicht zu dem Motor des Aktuators.

Die mechanische Kopplung zwischen den beiden Exzenterantrieben einer Achse wird bei der Erfindung über einen Zugmitteltrieb gewährleistet. Bei derartigen Zugmitteltrieben können Zahnriemen oder auch Ketten zum Einsatz kommen. Die Zugmittel können dabei in einfacher Weise Kurbelräder beider Exzenterantriebe und ein Antriebsrad des Motors umschlingen. Ggf. genügt ein endloses Zugmittel, das sowohl das Antriebsrad des Motors als auch die beiden Kurbelräder der beiden Exzenterantriebe umschlingt. Bei einer Betätigung des Motors können dann beide Kurbelräder im gleichen Drehsinn verdreht werden, so dass der Radsturz des einen Rades positiv und der Radsturz des anderen Rades negativ verstellt wird. Hier kann demzufolge eine synchronisierte Sturzverstellung der beiden Räder einer Achse realisiert werden.

Erfindungsgemäße Einrichtungen sind vorzugsweise losgelöst von der Federbeinlagerung. Das bedeutet, dass die Leistungsbereitstellung beispielsweise von einem Elektromotor deutlich reduziert werden kann. Denn anders als bei der aus DE 199 42 890 A1 bekannten Lösung wird lediglich Leistung und Haltekraft benötigt, wenn eine Verstellung durchgeführt werden soll. Bei der bekannten Vorrichtung hingegen wirken oft in dem Exzenterantrieb ständig erhebliche Kräfte, da dieser Exzenterantrieb Teil eines Federbeinlagers ist.

Die bereits oben erwähnten Fahrwerkslenker können an den Kurbelzapfen der Kurbelräder schwenkbar gelagert sein, wobei die Kurbelzapfen exzentrisch an den Kurbelrädern angeordnet sind. Unter Drehung der Kurbelräder wird nun ein Kurbelhub an die Fahrwerkslenker weitergegeben, so dass diese ihre Lage und somit die Lage des Radträgers verändern.

Nachstehend wird die Erfindung anhand eines in einer Figur abgebildeten Ausführungsbeispieles näher erläutert.

Figur 1 zeigt in schematischer Darstellung eine erfindungsgemäße Achse eines Kraftfahrzeuges mit einer Einrichtung zur Verstellung des Radsturzes der Räder einer Achse eines Kraftfahrzeuges. Ein Aktuator 1 ist zur Verstellung des Radsturzes mit einem Exzenterantrieb 2 versehen. Der Exzenterantrieb 2 ist gelenkig an einen Fahrwerkslenker 3 angeschlossen, wobei der Fahrwerkslenker 3 andererseits an einem ein hier nicht abgebildetes Rad tragenden Radträger 4 gelenkig angeschlossen ist.

Der Aktuator 1 umfasst ferner einen Elektromotor 5, der ein Antriebsrad 6 antreibt. Das Antriebsrad 6 ist vorliegend als Zahnriemenscheibe ausgebildet.

Sowohl der Elektromotor 5 als auch die beiden Exzenterantriebe 2 sind an einem Fahrschemel 7 des Kraftfahrzeuges gelagert. An dem Fahrschemel 7 sind weitere Fahrwerkslenker 8 gelenkig angeschlossen, die andererseits an den Radträger 4 gelenkig angeschlossen sind. Ein hier lediglich schematisch abgebildetes Federbein 9 ist an diesem unteren Fahrwerkslenker 8 abgestützt.

Der Exzenterantrieb 2 weist ein Kurbelrad 10 auf, das vorliegend ebenfalls als Zahnriemenscheibe ausgebildet ist. An dem Kurbelrad 10 ist exzentrisch zu dessen Drehachse ein Kurbelzapfen 11 angeordnet. Auf dem Kurbelzapfen 11 ist der Fahrwerkslenker 3 mit seinem einen Ende schwenkbeweglich gelagert, wobei diese Schwenkbewegungen des Fahrwerkslenkers 3 um die Achse des Kurbelzapfens 11 möglich sind.

Ein endloses Zugmittel 12 umschlingt sowohl das Antriebsrad 6 als auch die beiden Kurbelräder 10 der beiden Exzenterantriebe 2. Das Zugmittel 12 ist vorliegend als endloser Zahnriemen ausgebildet.

Nachstehend wird die Wirkungsweise der erfindungsgemäßen Einrichtung näher erläutert: Wenn der Elektromotor 5 betätigt wird, dreht dessen Antriebsrad 6 beispielsweise im Uhrzeigersinn. Diese Drehbewegung wird über das Zugmittel 12 auf die beiden Exzenterantriebe 2 übertragen. Beide Kurbelräder 10 der Exzenterantriebe 2 drehen ebenfalls im Uhrzeigersinn. Der links im Bild abgebildete Fahrwerkslenker 3 wird demzufolge in Richtung auf den Elektromotor 5 verschoben, wobei der Radträger 4 ebenfalls im Uhrzeigersinn verschwenkt und somit den Radsturz verändert. Der rechts im Bild abgebildete Fahrzeuglenker 3 wird weg von dem Elektromotor 5 verschoben, so dass der rechts im Bild abgebildete Radträger 4 ebenfalls im Uhrzeigersinn nach außen verkippt. Der Radsturz des einen Rades wird demzufolge negativ und der Radsturz des anderen Rades wird demzufolge positiv, beide jedoch synchron verstellt.

### Bezugszahlenliste

- 1: Aktuator
- 2: Exzenterantrieb
- 3: Fahrwerkslenker
- 4: Radträger
- 5: Elektromotor
- 6: Antriebsrad
- 7: Fahrschemel
- 8: Fahrwerkslenker
- 9: Federbein
- 10: Kurbelrad
- 11: Kurbelzapfen
- 12: Zugmittel

## Patentansprüche

1. Achse eines Kraftfahrzeuges mit einer Einrichtung zur Verstellung des Radsturzes der Räder umfassend einem Aktuator (1), der zur Verstellung des Radsturzes mit seinem Exzenterantrieb (2) über Fahrwerkslenker (3) an einem das Rad tragenden Radträger (4) angreift, wobei an jedem Rad einer dieser Exzenterantriebe (2) über jeweils einer der Fahrwerkslenker (3) angreift, wobei beide Exzenterantriebe (2) von einem gemeinsamen Motor (5) des Aktuators (1) angetrieben werden und wobei beide Exzenterantriebe (2) an einem Fahrschemel (7) des Kraftfahrzeuges oder am Fahrzeugaufbau lagerbar sind und wobei der Motor, insbesondere Elektromotor (5) über einen Zugmitteltrieb die Exzenterantriebe (2) antreibt, wobei ein oder mehrere Zugmittel (12) Kurbelräder (10) beider Exzenterantriebe (2) und ein Antriebsrad (6) des Motors umschlingen.

2. Achse nach Anspruch 1, bei der die Fahrwerkslenker an Kurbelzapfen (11) der Kurbelräder (10) schwenkbar gelagert sind, wobei die Kurbelzapfen (11) exzentrisch an den Kurbelrädern (10) angeordnet sind.

3. Achse nach Anspruch 1, bei der unter Betätigung des Motors der Radsturz des einen Rades positiv und der Radsturz des anderen Rades negativ verstellt wird.

## Claims

1. Axle of a motor vehicle having a device for adjusting the camber of the wheels, comprising an actuator (1) which, in order to adjust the camber, acts with its eccentric drive (2) via chassis links (3) on a wheel support (4) which supports the wheel, one of the said eccentric drives (2) acting on each wheel via in each case one of the chassis links (3), both eccentric drives (2) being driven by a common motor (5) of the actuator (1), and it being possible for both eccentric drives (2) to be mounted on a subframe (7) of the motor vehicle or on the vehicle body, and the motor, in particular electric motor (5), driving the eccentric drives (2) via a traction mechanism drive, one or more traction mechanisms (12) wrapping around crank wheels (10) of both eccentric drives (2) and an output wheel (6) of the motor.

2. Axle according to Claim 1, in which the chassis links are mounted pivotably on crank pins (11) of the crank wheels (10), the crank pins (11) being arranged eccentrically on the crank wheels (10).

3. Axle according to Claim 1, in which, by actuation of the motor, the camber of one wheel is adjusted positively and the camber of the other wheel is adjusted negatively.

## Revendications

1. Essieu d'un véhicule automobile comprenant un dispositif pour ajuster le carrossage des roues, comprenant un actionneur (1), qui, pour l'ajustement du carrossage, vient en prise avec sa commande par excentrique (2) par le biais de bras de suspension (3) avec un support de roue (4) portant la roue, l'une de ces commandes par excentrique (2) venant en prise avec chaque roue par le biais d'un bras de suspension respectif (3), les deux commandes par excentrique (2) étant entraînées par un moteur commun (5) de l'actionneur (1) et les deux commandes par excentrique (2) pouvant être supportées sur un sous-châssis (7) du véhicule automobile ou sur la caisse du véhicule et le moteur, en particulier un moteur électrique (5), entraînant les commandes par excentrique (2) par le biais d'un mécanisme d'entraînement à moyen de traction, un ou plusieurs moyens de traction (12) enveloppant des roues de manivelle (10) des deux commandes par excentrique (2) et une roue d'entraînement (6) du moteur.

2. Essieu selon la revendication 1, dans lequel les bras de suspension sont montés de manière pivotante sur des manetons (11) des roues de manivelle (10), les manetons (11) étant disposés de manière excentrique sur les roues de manivelle (10).

3. Essieu selon la revendication 1, dans lequel l'actionnement du moteur permet d'ajuster le carrossage d'une des roues de manière positive et le carrossage de l'autre roue de manière négative.
